# EUROPEAN PATENT APPLICATION

(11) **EP 2 503 303 A2**
(43) Date of publication of application: **26.09.2012**
(21) Application number: 12460009.9
(22) Date of filing: 21.03.2012
(51) Int. Cl.: G01D 5/353

(54) **System for simultaneous monitoring of many physico-chemical quantities in several places of the natural environment**

(30) Priority: 23.03.2011 PL 39431811
(71) Applicant: Telekomunikacja Polska S.A., 00-105 Warszawa (PL)
(72) Inventor: Perlicki, Krzysztof, 05-820 Piastow (PL)
(74) Representative: Piotrowicz, Alicja

(57) **Abstract**

Optical sensors sets (ZCO₁, ZCO₂, ..., ZCOₖ) located in specific telecommunication infrastructures cooperate with the single-mode optical fiber (F), which is connected with an optical fiber reflectometer (R). The outputs of a data processing systems (UPD₁, UPD₂, ..., UPDₖ) are connected with the inputs of a data analysis system (UAD), whose output is connected with a display control system (DCS). To the display control system (DCS), keyboard (K) and display (W) are connected. The number of optical sensors sets (ZCO₁, ZCO₂, ..., ZCOₖ) and the number of optical sensors contained in them are chosen depending on the current needs of simultaneous monitoring of a specific number of locations in the telecommunication infrastructure.

## Description

The invention relates to a system for simultaneous monitoring of multiple physico-chemical quantities in several locations of natural environment, particularly in several locations of telecommunication infrastructure having single-mode optical fiber conducted.

The Polish Patent Document PL 170851 B1 discloses an optical fiber reflectometer with a single-mode optical fiber cooperating with an optimeter.

In the sensor, known from US Patent Document No. US 6075907, numerical values of two physical quantities are set over a long interval of time at two wavelengths of visible electromagnetic radiation.

The essence of the system for simultaneous monitoring of multiple physico-chemical quantities in several locations of natural environment, according to the invention, consists in the fact that k sets of optical sensors cooperates with the single-mode optical fiber, where k is a finite natural number, while k^{th} set of optical sensors is connected via an optical fiber reflectometer with a selective forking element and with inputs connected with z k data processing systems. Outputs of k data processing systems are connected with the inputs of a data analysis system and with the inputs of a cumulating element. The output of the cumulating element is connected to a display via a display control system. To the display control system (DCS), the output of the data analysis system and the output of a keyboard are connected.

Preferably, the the set of optical sensors, between the j^{th} selective distributing element and j^{th} cumulating element, where the natural number j = 1, 2, ..., k, comprises n optical sensors connected in parallel; while the i j ^{th} optimeter measures the i^{th} physico-chemical quantity using an optical signal with a wavelength of λᵢ, where the natural number i = 1, 2, ..., n.

Preferably, the the set of optical sensors, where the natural number j = 1, 2, ... , k, comprises n optical sensors connected in series, while the ij^{th} optimeter measures the i^{th} physico-chemical quantity using an optical signal with a wavelength of λᵢ, where the natural number i = 1, 2, ..., n.

Preferably, the jt^{h} data processing system, where the natural number j = 1, 2, ..., k, comprises n two-terminal networks connected in parallel, formed of a system determining the location of the optimeter measuring the i^{th} physico-chemical quantity and a system determining the numerical value of i^{th} physico-chemical quantity, where the natural number i = 1, 2, ..., n, connected in series.

Preferably, before the input port of the single mode optical fiber, the (k+1)^{th} set of optical sensors is located, while between the selective distributing element and the cumulating element, the (k+1)^{th} data processing system is located with its output connected to the data analysis system.

Preferably, sensors of the j^{th} optical sensor set, where the natural number j = 1, 2, ..., k, are passive optical fiber sensors with internal processing with a change of optical signal transmission.

Preferably, the j^{th} set of optical sensors, where the natural number j = 1, 2, ..., k, comprises: temperature sensor, humidity sensor, motion sensor, vibration sensor, dust sensor, smoke sensor, carbon monoxide sensor.

The basic preferable effects of using a system for simultaneous monitoring of multiple physico-chemical quantities in several locations of natural environment according to the invention, in relation to prior art, consist in the fact that by using only one single mode optical fiber in each of these locations of natural environment, through which the single-mode optical fiber is conducted after connecting an optical sensor set to it, the physico-chemical quantities are monitored simultaneously. The architecture of the system for simultaneous monitoring of multiple physico-chemical quantities in several locations of natural environment according to the invention has a modular structure. The specific number of optical sensor sets, expressed as the natural number k, is supplemented depending on the current needs of physico-chemical quantity monitoring in specific locations of natural environment that the single-mode optical fiber passes through. This resolves itself into installation of another (additional) (k+1) ^{th} optical sensor set on the single mode optical fiber and a standard reconfiguration of the existing system structure, which consists of starting another module in the data processing system. Setpoint thresholds of early warning signals for the individual physico-chemical quantities are chosen in the data analysis system according to needs of the user of a given location of natural environment monitoring.

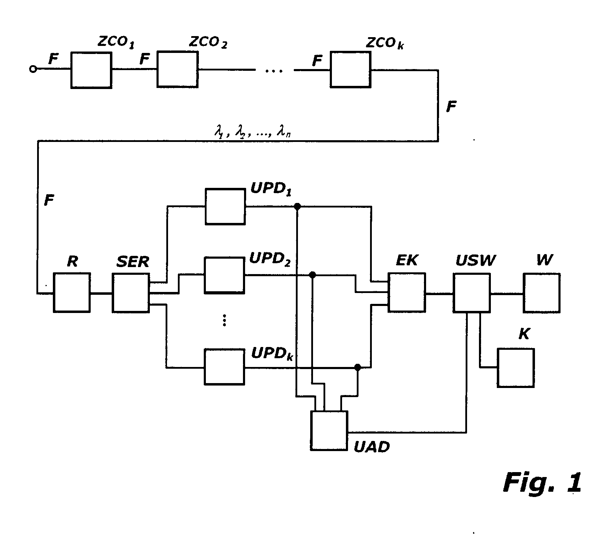

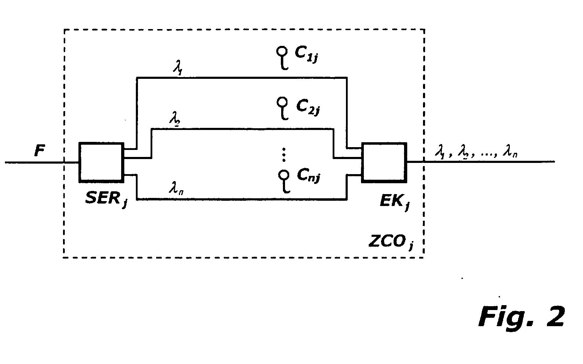

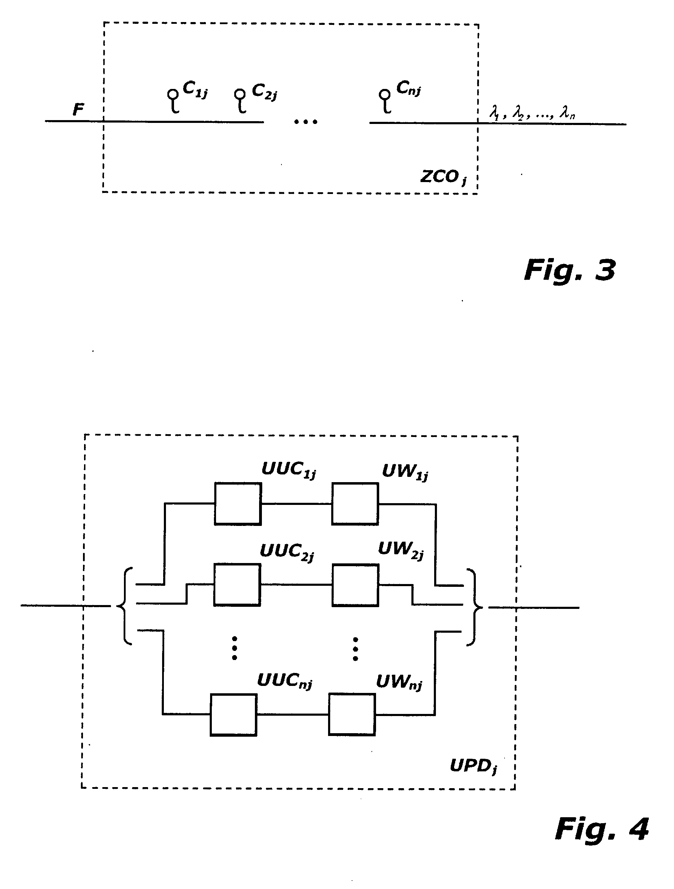

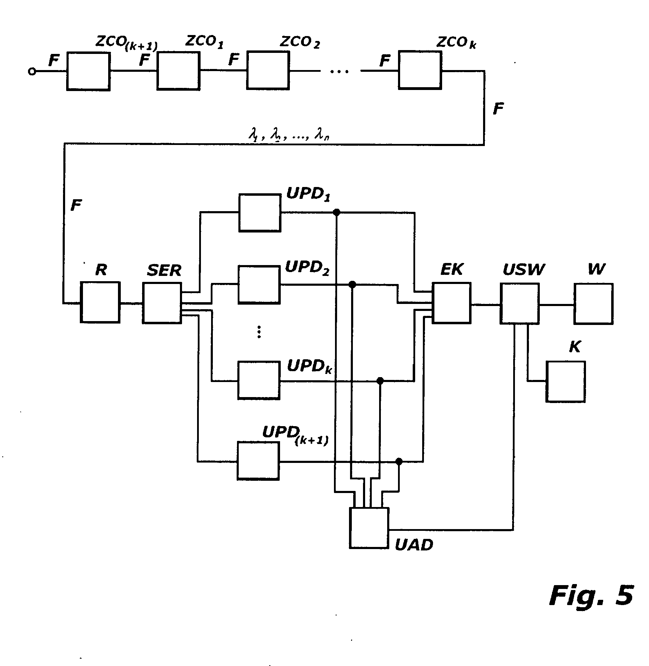

One example embodiment of the system for simultaneous monitoring of multiple physico-chemical quantities in several locations of natural environment according to the invention is reproduced in the drawings, where Fig. 1 shows a block diagram of a system for simultaneous monitoring of multiple physico-chemical quantities in k locations of natural environment, Fig. 2 - a block diagram of the the optical sensor set with a parallel structure, Fig. 3 - a block diagram of the j^{th} optical sensor set with a serial structure, Fig. 4 - a block diagram of a jt^{h} data processing system, Fig. 5 - a block diagram of a system for simultaneous monitoring of multiple physico-chemical quantities in (k+1) locations of natural environment.

In one example embodiment of a system for simultaneous monitoring of multiple physico-chemical quantities in several locations of natural environment according to the invention, optical sensor sets ZCO₁, ZCO₂, ..., ZCOₖ cooperate with the single-mode optical fiber F, while the k^{th} set of optical sensors ZCOₖ is connected with the selective forking element SER via optical fiber reflectometer R. Inputs of the selective forking element SER are connected to data processing systems UPD₁, UPD₂, ..., UPDₖ, while outputs of the data processing systems UPD₁, UPD₂, ..., UPDₖ are connected with inputs of the data analysis system UAD and with inputs of the cumulating element EK. Output of the cumulating element EK is connected with display W via display control system DCS. In display W, the results of measurements of all physico-chemical quantities in the individual telecommunication infrastructures and early warning signals exceeding the permissible numerical value of a given physico-chemical quantity are currently shown.

To display control system DCS, the output of the data analysis system UAD and the output of keyboard K are connected. Using keyboard K, the electric signals defining setpoint thresholds for early warning signals for individual physico-chemical quantities, according to the needs of the user of a given telecommunication infrastructure, are being entered into the data analysis system UAD.

In the j^{th} telecommunication infrastructure, where the natural number j = 1, 2, ..., k, the jt^{h} set of optical sensors ZCOⱼ is located, in which, between j^{th} selective distributing element SERⱼ and j^{th} cumulating element EKⱼ, the n optical sensors connected in parallel C₁ⱼ, C₂ⱼ, ..., Cₙⱼ are located. The ij^{th} optimeter (Cᵢⱼ) located in j^{th} optical sensor set ZCOⱼ measures the i^{th} physico-chemical quantity using optical signal with a wavelength of λᵢ, where the natural number i = 1, 2, ..., n, where n is the number of wavelengths used by the reflectometer.

The sensors of j^{th} optical sensor set ZCOⱼ, where the natural number j = 1, 2, ..., k, are passive optical fiber sensors with internal processing with a change of optical signal transmission.

Each j^{th} set of optical sensors ZCOⱼ, where the natural number j = 1, 2, ..., k, comprises: temperature sensor, humidity sensor, motion sensor, vibration sensor, dust sensor, smoke sensor, carbon monoxide sensor.

In another example of the embodiment, the jt^{h} set of optical sensors ZCOⱼ comprises n optical sensors connected in series Cᵢⱼ. In the j^{th} telecommunication infrastructure, ij^{th} optimeter Cᵢⱼ measures i^{th} physico-chemical quantity, while an optical signal with a wavelength of λᵢ, where the natural number i = 1, 2, ..., n, is attributed to this i^{th} physico-chemical quantity. The measured numerical value of the i^{th} physico-chemical quantity is changed into a numerical value of optical signal rejection with a wavelength of λᵢ.

In j^{th} data processing system UPDⱼ, where the natural number j = 1, 2, ..., k, n two-terminal networks connected in parallel are located, which are formed of a localization system, optimeter Cᵢⱼ measuring i^{th} physico-chemical quantity UUCᵢⱼ and a system determining the numerical value of i^{th} physico-chemical quantity UWᵢⱼ, where the natural number i = 1, 2, ..., n, connected in series.

In the next example embodiment, requiring expansion of functional structure of the system, which ensures monitoring of an additional (k+1)^{th} telecommunication infrastructure, before input port Z of the single mode optical fiber F, the (k+1)^{th} set of optical sensors ZCO₍ₖ₊₁₎ is located, while between selective distributing element SER and cumulating element EK, the (k+1)^{th} data processing system UPD₍ₖ₊₁₎ is located, with an output connected to the data analysis system UAD.

A system for simultaneous monitoring of multiple physico-chemical quantities in several locations of natural environment according to the invention is suitable for simultaneous current monitoring of the course of changes in multiple physico-chemical quantities in specific locations of telecommunication infrastructure, while the parameters of early warning signals for the individual physico-chemical quantities are being remotely reprogrammed without the necessity for changes in the currently existing structure of the system for simultaneous monitoring of multiple physico-chemical quantities in several locations of natural environment.

Though the system for simultaneous monitoring of multiple physico-chemical quantities in several locations of natural environment according to the invention is defined by seven claims, and which is presented in the form of specific example embodiments in the description of the invention and reproduced in the figures, for those skilled in the art of systems for simultaneous monitoring of multiple physico-chemical quantities in several locations of natural environment, it is obvious that the data concerning the system for simultaneous monitoring of multiple physico-chemical quantities in several locations of natural environment contained in them cannot be interpreted as limiting the idea of the invention to only them.

List of reference designations
Cᵢⱼ - optimeter measuring i^{th} physico-chemical quantity, where the natural number i = 1, 2, ... n, while this optimeter is located in j^{th} optical sensors set ZCOⱼ, where the natural number j = 1, 2, ... k,
EK - cumulating element,
EKⱼ - j^{th} cumulating element,
F - single mode optical fiber,
K - keyboard,
R - an optical fiber reflectometer,
UUCᵢⱼ - system determining the location of optimeter Cᵢⱼ measuring i^{th} physico-chemical quantity,
UWᵢⱼ - system determining the numerical value of i^{th} physico-chemical quantity,
SER - selective forking element,
SERⱼ - j^{th} selective forking element,
UAD - data analysis system,
UPDⱼ - j^{th} data processing system,
DCS - display control system,
UZⱼ - j^{th} power supply of j the optical sensor set ZCOⱼ,
W - display,
Z - input port of the single mode optical fiber,
ZCOⱼ - j^{th} set of optical sensors, where the natural number j = 1, 2, ... k,
λᵢ - wavelength of the optical signal emitted from ij^{th} optimeter Cᵢⱼ measuring i^{th} physico-chemical quantity, where the natural number i = 1, 2, ... n,

## Claims

1. A system for simultaneous monitoring of multiple physico-chemical quantities in several locations of natural environment with optical sensors, a reflectometer, display and keyboard, **characterised in that** k sets of optical sensors (ZCO₁, ZCO₂, ..., ZCOₖ), where k is a finite natural number cooperate with the single-mode optical fiber (F), while the k^{th} set of optical sensors (ZCOₖ) is connected via an optical fiber reflectometer (R) with selective forking element (SER), with inputs connected with data processing systems (UPD₁, UPD₂, ..., UPDₖ), while the outputs of data processing systems (UPD₁, UPD₂, ..., UPDₖ) are connected with the inputs of a data analysis system (UAD) and with the inputs of a cumulating element (EK), whose output is connected via a display control system (DCS) with a display (W), while the output of the data analysis system (UAD) and the output of a keyboard (K) are connected to the display control system (DCS).

2. A system of claim 1, **characterised in that** the j^{th} set of optical sensors (ZCOⱼ), between j^{th} selective distributing element (SERⱼ) and j^{th} cumulating element (EKⱼ), where the natural number j = 1, 2, ..., k, comprises n optical sensors connected in parallel (C₁ⱼ, C₂ⱼ, ..., Cₙⱼ), while the ij^{th} optimeter (Cᵢⱼ) measures i^{th} physico-chemical quantity using an optical signal with a wavelength of λᵢ, where the natural number i = 1, 2, ..., n.

3. A system of claim 1, **characterised in that** the j^{th} set of optical sensors (ZCOⱼ), where the natural number j = 1, 2, ..., k, comprises n optical sensors connected in series (Cᵢⱼ), while the ij^{th} optimeter (Cᵢⱼ) measures i^{th} physico-chemical quantity using an optical signal with a wavelength of λᵢ, where the natural number i = 1, 2, ..., n.

4. A system of claim 1 or 2 or 3, **characterised in that** the j^{th} data processing system (UPD), where the natural number j = 1, 2, ..., k, comprises n two-terminal networks connected in parallel, formed of localization system of the optimeter (Cᵢⱼ) measuring i^{th} physico-chemical quantity (UUCᵢⱼ), and a system determining the numerical value of i^{th} physico-chemical quantity (UWᵢⱼ), where the natural number i = 1, 2, ..., n, connected in series.

5. A system of claim 1 or 2 or 3 or 4, **characterised in that** before the input port (Z) of the single mode optical fiber (F), (k+1) ^{th} set of optical sensors (ZCO₍ₖ₊₁₎) is located, while between the selective distributing element (SER) and the cumulating element (EK), the (k+1)^{th} data processing system (UPD₍ₖ₊₁₎) is located, whose output is connected with the data analysis system (UAD).

6. A system of claim 1 or 2 or 3 or 4 or 5, **characterised in that** sensors of the j^{th} optical sensor set (ZCOⱼ), where the natural number j = 1, 2, ..., k, are passive optical fiber sensors with internal processing with a change of optical signal transmission.

7. A system of claim 1 or 2 or 3 or 4 or 5 or 6, **characterised in that** the j^{th} set of optical sensors (ZCOⱼ), where the natural number j = 1, 2, ..., k, comprises:
temperature sensor, humidity sensor, motion sensor, vibration sensor, dust sensor, smoke sensor, carbon monoxide sensor.
